(19) Europäisches Patentamt
European Patent Office
Office européen des brevets

(11) Veröffentlichungsnummer: **0 006 547**
**B2**

# (12) NEUE EUROPÄISCHE PATENTSCHRIFT

(45) Veröffentlichungstag der neuen Patentschrift: **30.04.86**

(51) Int. Cl.⁴: **C 08 L 33/02**, C 09 D 3/80, C 09 G 1/10

(21) Anmeldenummer: **79101958.1**

(22) Anmeldetag: **15.06.79**

## (54) Fussbodenpoliermassen.

(30) Priorität: **26.06.78 DE 2828008**

(43) Veröffentlichungstag der Anmeldung: **09.01.80 Patentblatt 80/1**

(45) Bekanntmachung des Hinweises auf die Patenterteilung: **30.09.81 Patentblatt 81/39**

(45) Bekanntmachung des Hinweises auf die Entscheidung über den Einspruch: **30.04.86 Patentblatt 86/18**

(84) Benannte Vertragsstaaten: **DE FR GB NL**

(56) Entgegenhaltungen:
**AT-B-251 151**
**DE-A-1 811 247**
**DE-A-2 142 941**
**DE-B-1 047 431**
**DE-B-1 277 191**
**US-A-3 749 772**

**Chem.Abstr. 65, 17150**
**Chem. Abstr. 80, 28394**
**Chem. Abstr. 84, 122816**
**Chem. Abstr. 83, 81286**
**Chem. Abstr. 76, 4478 d**
**Chem. Abstr. 79, 96982**

(73) Patentinhaber: **BASF Aktiengesellschaft, Carl-Bosch-Strasse 38, D-6700 Ludwigshafen (DE)**

(72) Erfinder: **Czauderna, Bernhard, Dr.-Chem., Hintergasse 4, D-6945 Hirschberg (DE)**
Erfinder: **Kuehneweg, Otto, Kranichstrasse 8, D-6700 Ludwigshafen (DE)**

**EP 0 006 547 B2**

LIBER, STOCKHOLM 1986

**Beschreibung**

Die Erfindung betrifft Fußbodenpoliermassen in Form von wäßrigen Dispersionen von wasserunlöslichen mit Metallionen vernetzten Copolymerisaten, die als Monomereinheiten carboxylgruppenhaltige olefinisch ungesättigte Verbindungen und zur kovalenten Vernetzung befähigte olefinisch ungesättigte Verbindungen enthalten, sowie Wachse und/oder Polyethylen mit denen glänzende Überzüge aufgebracht werden können, die extrem wasserfest sind, jedoch mit alkalischen, insbesondere ammoniakhaltigen wäßrigen Lösungen leicht entfernt werden können.

Aus der US-PS-2 904 526 sind wäßrige Dispersonen bekannt, die wasserunlösliche Copolymerisate aus beispielsweise Acrylsäure mit einem anderen ethylenisch ungesättigten Comonomeren enthalten, wobei die Copolymerisate mit Metallionen, wie Zinkionen, vernetzt sind. Diese Dispersionen eignen sich zur Herstellung von Überzügen auf Materialien mannigfacher Art, doch sind letztere noch zu wenig wasserecht, d.h. ein mit solchen Dispersionen behandeltes Substrat wird fleckig, wenn es mit Wasser in Berührung kommt.

Aus der DE-OS-1 519 316 sind ähnliche Dispersionen bekannt, die zusätzlich ein Wachs und gegebenenfalls alkalilösliche Harze eindispergiert enthalten. Mit diesen Dispersionen erhält man insbesondere Fußbodenpolituren von hohem Glanz; aber auch in diesem Fall läßt die Wasserechtheit zu wünschen übrig.

Aus der DE-PS-2 142 941 sind Dispersionen ähnlichen Aufbaus bekannt; sie enthalten anstelle von Wachsen ein sauerstoffhaltiges Hochdruckpolyethylen des Molekulargewichts von ca. 10 000 bis 30 000, das Erweichungspunkte von über 100°C aufweist. Solche Dispersionen ergeben zusätzlich lösungsmittelechte Überzüge, aber das Problem der Wasserechtheit wird auch mit dieser Lehre nicht aus der Welt geschafft.

Das Ziel der Erfindung bestand darin, Fußbodenpoliermassen zu schaffen, die mit und ohne andere Zusätze glanzende Überzüge ergeben, die genügend hart aber nicht spröde sind, die leicht entfernbar sind, die ohne Redispergierung bereits vorhandener Überzüge aufgebracht werden können, die lösungsmittelecht und vor allem resistent gegen Wasser im sauren und schwach alkalischen pH-Bereich sind.

Dieses Ziel wurde überraschenderweise, wie in den Patentansprüchen definiert, erreicht.

Das Überraschende besteht darin, daß solche durch kovalente Bindungen vernetzte Copolymerisate trotzdem durch alkalische, insbesondere Ammoniaklösungen leicht vom Substrat weggelöst werden können, und daß sie bis zu pH-Werten bis zu ca. 9,0 resistent gegen Wasser sind. Des weiteren ergeben sie, was an sich zu befürchten war, keineswegs spröde und brüchige, sondern elastische Überzüge.

Aus der DE-OS-1 811 247 sind zwar Polierzubereitungen auf der Basis von Acrylpolymerisaten bekannt, die 12 bis 50 Gew.-% an α,β-ungesättigten Carbonsäuren einpolymerisiert enthalten, bei denen bis zu 25 Gew.-% an anderen hydrophilen Monomeren zugegen sein können, wobei als ein solches hydrophiles Monomer unter vielen anderen auch N-Methylolmethacrylamid angegeben ist. Abgesehen davon, daß diese Verbindung in keinem speziellen Beispiel dieser Offenlegungsschrift expressis verbis erwähnt ist, findet sich auch nirgends ein Hinweis, wie diese Verbindung wirkt, und noch viel weniger eine Angabe darüber, daß gerade ein Zusatz von 1 bis 5 Gew.-% an derartigen Vernetzern wasserresistente und flexible Filme ergibt, die bei Zusatz von Vernetzern eigentlich hätten spröde werden müssen. Wie wir festgestellt haben, bewirken Über- und Unterschreitungen dieser Zahlengrenzen eine sofortige Verschlechterung der genannten vorteilhaften Wirkungen.

Das wasserunlösliche Copolymerisat, das mit Metallionen und N-Methylol(meth)acrylamid vernetzt werden soll, kann bevorzugt durch Emulsionscopolymerisation eines oder mehrerer monoethylenisch ungesättigter carboxylgruppenfreier Monomerer mit carboxylgruppenhaltigen Monomeren hergestellt werden. Außerdem werden erfindungsgemäß dem Ansatz N-Methylol(meth)acrylamid als monoethylenisch ungesättigtes Monomer zugesetzt, das eine zur kovalenten Vernetzung befähigte Gruppe enthält.

Von den carboxylgruppenfreien Monomeren seien beispielsweise genannt: Ester der Acrylsäure oder Methacrylsäure mit einem gesättigten einwertigen aliphatischen Alkohol, insbesondere einem Alkanol mit 1 bis 18 Kohlenstoffatomen wie Methanol, Ethanol, n- und Isopropanol, n-Butanol, Isobutanol, sek.-Butanol und tert.-Butanol, Pentanole, Hexanole, Octanole, wie 2-Ethylhexanol, Decanole, Dodecanole, Hexadecanole, Octadecanole, Alkoholgemische wie $C_9/C_{11}$-, $C_{11}/C_{13}$-Oxo- oder $C_8/C_{10}$-, $C_{12}/C_{14}$- oder $C_{16}/C_{18}$-Ziegleralkohole, sodann cyclische Alkanole wie Cyclopentanol oder -hexanol.

Bevorzugte Copolymerisate sind solche, die wenigstens einen dieser Ester der Acrylsäure und ein oder mehrere Monomere enthalten, welche aus $C_1$- bis $C_4$-Methacrylaten ausgewählt werden. Ferner können noch andere Comonomere, wie Acrylnitril, Vinylacetat, Styrol, Vinylchlorid oder Vinylidenchlorid zugegen sein.

Besonders bevorzugte carboxylgruppenfreie Comonomere sind Gemische aus Methyl- und/oder Ethylmethacrylat mit Acrylsäure oder Methacrylsäure - $C_4$- bis $C_{10}$-Alkylestern, denen die im vorigen Absatz genannten sonstigen Comonomeren beigemischt sein können.

Als carboxylgruppenhaltige Comonomere sind Acrylsäure oder Methacrylsäure in Mengen von - bezogen auf festes Copolymerisat - 1 bis 15 Gewichtsprozent zu nennen.

Die dritte und erfindungswesentliche Komponente, die zu 1 bis 5 Gewichtsprozent - bezogen auf festes Copolymerisat - anwesend ist, wird durch N-Methylolacrylamid oder N-Methylolmethacrylamid, die beide eine zur kovalenten Vernetzung der Polymerisate befähigte Gruppe ent-

halten, dargestellt.

Die Emulsionscopolymerisation wird nach an sich bekannten Methoden durchgeführt. Hierbei wird die ausgewählte Comonomerencharge mittels eines anionischen, nichtionischen oder kationischen, vorzugsweise eines anionischen oder nichtionischen Dispergiermittels, das zu 0,1 bis 10 Gewichtsprozent, bezogen auf die Monomeren, anwesend ist, dispergiert. Das carboxylgruppenhaltige Monomere ist naturgemäß in Wasser löslich, so daß das Dispergiermittel dazu dient, die anderen Comonomeren zu emulgieren. Ein freie Radikale liefernder Polymersationsinitiator, wie Ammonium- oder Kaliumperoxidisulfat, Peroxid oder Azoisobutyronitril, kann allein oder in Verbindung mit einem Beschleuniger, wie Kaummetabisulfit oder anderen Reduktionsmitteln verwendet werden. Initiator und Beschleuniger, auch "Katalysator" genannt, können in Mengen von 0,5 bis 2 % bezogen auf Monomerengewicht - eingesetzt werden. Die Polymerisationstemperatur kann 20 bis 95°C betragen, vorzugsweise, um eine vorzeitige Vernetzung bestimmter reaktive Gruppen tragende Monomeren zu vermeiden, 20 bis 30°C.

Geeignete anionische Dispergiermittel sind beispielsweise Natriumsalze höherer Fettalkoholsulfate wie Na-Laurylsulfat, höhere Fettsäuresalze, wie Na-Oleat oder -Stearat.

Nichtionische Dispergiermittel sind beispielsweise oxethylierte Nonylphenole oder oxethylierte höhere Fettalkohole. Es können natürlich außerdem bei den repräsentativ genannten Gruppen beliebige andere gewählt werden - die richtige Auswahl zu treffen gehört zum Allgemeinwissen des auf diesem Gebiet tätigen Fachmannes.

Wenn das Polymere durch Emulsionspolymerisation unter anfänglicher oder ausschließlicher Verwendung eines anionischen Emulgiermittels hergestellt wird, kann es notwendig sein, der fertigen Dispersion zusätzlich ein nichtionisches Dispergiermittel der obengenannten Art zuzusetzen, bevor die mehrwertige Metallverbindung zugefügt wird. Die Menge dieses zusätzlich einzusetzenden nichtionischen Dispergiermittels hängt von der Menge an verwendetem anionischem Dispergiermittel und von der Menge an zuzusetzenden Metallverbindungen ab.

Die zuzusetzenden Metallionen sind inbesondere Ionen des Berylliums, Magnesiums, Zinks, Bariums, Strontiums, Aluminiums, Wismuts, Antimons, Kobalts, Eisens, Nickels aber auch anderer mehnwertiger Metalle.

Die Ionen werden in Form von Metallverbindungen eingesetzt. Man verwendet zweckmäßigerweise die Metallverbindungen in einer Menge von 0,3 bis 5 % - bezogen auf das Gewicht der Copolymerisate - vorzugsweise von 0,4 bis 1 %.

Als Metallverbindungen kommen diejenigen in Betracht, die in Wasser zu wenigstens 1 Gewichtsprozent löslich sind, also beispielsweise Hydroxide, Oxide, basische, neutrale oder saure Salze, wie Acetate aber auch Ammoniak- oder Aminkomplexe, insbesondere des Zinks oder Calciums.

Durch die Anwesenheit der Metallionen werden die Copolymerisate infolge der Anwesenheit freier Carboxylgruppen ionisch vernetzt. Die Dispersion soll einen Feststoffgehalt von mindestens 8 Gewichtsprozent, vorzugsweise von 10 bis 70 Gewichtsprozent aufweisen. Ihr pH-Wert beträgt, bedingt durch die Polymerisationsbedingungen und den Metallzusatz, 7 bis 11, vorzugsweise 8 bis 10. Er kann durch Zusatz von beispielsweise Ammoniak beliebig eingestellt werden. Die erhaltenen Dispersionen können beliebig mit Wasser verdünnt und auf die je nach Anwendungszweck gewünschte Konzentration eingestellt werden.

Wird nun die enfindungsgemäße Fußbodenpoliermasse aufgebracht, so trocknet sie als glänzender Film auf, wobei neben der ionischen Vernetzung eine zusätzliche kovalente Vernetzung - bedingt durch die reaktive Gruppen tragenden Comonomereinheiten - eintritt. Es resultieren daraus sehr harte, jedoch genügend elastische Überzüge mit großer Lösungsmittel- und Wasserresistenz. Sie können leicht mit beispielsweise ammoniakhaltigem Wasser (Komplexierung des Metalls) wieder abgewaschen werden.

Die erfingdungsgemäße Fußbodenpoliermasse enthält Wachse und/oder ein Polyethylen in einer Menge, bezogen auf das Copolymerisat, bis zu 95 Gew.-%. Besonders günstig ist der Zusatz des in der DE-PS-2 142 941 beschriebenen sauerstoffhaltigen Hochdruckpolyethylens, das einen hohen Erweichungspunkt von über 100°C und Molgewichte zwischen 10 000 bis 30 000 und somit keine wachsartigen Eigenschaften mehr besitzt. Vorzugsweise wird das Polyethylen in Form einer 20- bis 40-gewichtsprozentigen wäßrigen Dispersion zugesetzt. Hierdurch wird vor allem die Lösungsmittelbeständigkeit der fertigen Überzüge weiter verbessert.

Des weiteren können bis zu 30 Gewichtsprozent, bezogen auf Copolymerisat, an Harzen, wie Styrol-Maleinatharze, wie sie in der DE-OS-1 519 316 beschrieben sind, zugegen sein.

Außerdem können neben den bereits vorhandenen Dispergiermitteln Weichmacher bis zu 30 Gewichtsprozent - bezogen auf Copolymerisat enthalten sein, und es seien davon z. B. Tributoxyethylphosphat, das auch als Verlaufmittel dienen kann, flüchtige Weichmacher wie Diethylenglycolmonomethyl oder -ethyläther, Dibutylphthalat u.a. genannt, wie sie in der DE-PS-2 142 941 detailliert aufgeführt sind. Außerdem können Verlaufmittel anwesend sein, von denen fluorhaltige wie die Verbindungen der Formel $C_mF_{2n+1}SO_2N(C_2H_5)CH_2\ COOK$, in der n für 6 bis 10, vorzugsweise für 8 steht, zu nennen sind.

Die Fußbodenpoliermassen können ferner Pigmente und Füllstoffe enthalten.

Die Fußbodenpoliermassen zeichnen sich neben ihrer Fähigkeit wassenfeste, lösungsmittelechte und harte aber trotzdem noch elastische Überzüge zu bilden auch dadurch aus, daß sie ohne Redispergierung bereits vorhandener Filme auf diese aufgebracht werden können. Sie stellen somit auf diesem Gebiet eine beachtliche Fortentwicklung dar.

Die neuen Fußbodenpoliermassen sollen anhand der nun folgenden Beispiele hinsichtlich ihrer Herstellung und Anwendung vorgestellt werden.

Genannte Teile sind Gewichtsteile, soweit sie nicht anders bezeichnet werden.

Raumteile und Gewichtsteile verhalten sich wie Liter zu Kilogramm.

**Beispiel 1**

Zu einer Lösung aus 260 Teilen Wasser und 0,4 Teilen Kaliumperoxidisulfat wurde bei 95°C eine Emulsion aus

250 Teilen Wasser,
148 Teilen Methylacrylat,
120 Teilen Methylmethacrylat,
80 Teilen Styrol,
40 Teilen Acrylsäure,
12 Teilen N-Methylolmethacrylamid,
0,2 Teilen Dodecylmercaptan
6 Teilen Dodecylschwefelsäure-Na-Salz und
70 Teilen einer 4 %-igen Kaliumperoxidisulfatlösung

innerhalb 2 Stunden unter Rühren zudosiert. Dann wurde bei derselben Temperatur innerhalb einer Stunde mit weiteren 20 Teilen Peroxidisulfatlösung obiger Konzentration versetzt und weiter 2 Stunden bei 85°G gerührt. Nach dem Abkühlen wurde mit 10,5 Teilen Zinkionen (=2,5 %) in Form einer ammoniakalischen Zinkacetatlösung versetzt und mit Ammoniak ein pH-Wert von 9 eingestellt.

Es liegt eine ca. 65-%-ige Dispersion vor.

**Beispiel 2**

Es wurde analog Beispiel 1 ein Monomerenzusatz aus

30 Teilen Methylmethacrylat,
55 Teilen Ethylacrylat,
12 Teilen Methacrylsäure und,
3 Teilen N-Methylolmethacrylamid,

den Zusätzen entsprechend Beispiel 1 und der Wassermenge, die zu einer 65-%-igen Dispersion führt, polymerisiert und mit Zink und Ammoniak versetzt.

**Beispiel 3**

Ebenfalls analog Beispiel 1 wurde eine zinkhaltige Dispersion aus



40 Teilen Methylmethacrylat,
20 Teilen Butylacrylat,
20 Teilen Ethylacrylat,
9 Teilen Styrol,
9 Teilen Methacrylsäure und
2 Teilen N-Methylolmethacrylamid

hergestellt.

**Beispiel 4**

Es wurde der Ansatz gemäß Beispiel 3 wiederholt, jedoch - bezogen auf den Monomerenansatz - mit 0,3 % $H_2O_2$, 0,3 % Ascorbinsäure, 0,001 % Eisen(II)sulfat als Initiatorsystem und bei 40°C polymerisiert. Es wurde eine 65-%-ige Dispersion erhalten.

**Vergleichsbeispiel A**

Beispiel 1 wurde wiederholt; jedoch wurden anstelle des N-Methylolmethacrylamids 12 Teile zusätzlichen Styrols eingestzt.

Die Zusammensetzung der Dispersion entspricht dem Stand der Technik (DE-PS-2 142 941 und DE-AS-1 519 316).

**Anwendungsbeispiele**

**Beispiel 5**

Fußbodenpflege(politur)emulsion

Zu 24 Gewichtsteilen einer auf 40 Gewichtsprozent verdünnten Dispersion gemäß Beispiel 1 gibt man 6 Teile einer 40-%-igen Polyethylendispersion (Molgewicht des Polyethylens 16 000 bis 18 000, Erweichungspunkt ca. 150°C).

65,5 Teile Wasser
2 Teile-Tributoxyethylphosphat
3 Teile Methyldiglycol
0,5 Teile Nonylphenol 8 Ethylenoxid
1 Teile Ethylenglycol
1 Teile fluorhaltiges Verlaufmittel

$$(C_8F_{17}SO_2\overset{\overset{\displaystyle C_2H_5}{|}}{N}—CH_2COOK).$$

Die Emulsion trocknet zu einem harten aber flexiblen lösungsmittel- und bis zu pH 9 wasserechten Film auf, der mit $NH_3$-Lösung leicht abgewaschen werden kann.

**Beispiel 6**

Fußbodenpflegeemulsion

Zu 26 Teilen einer auf 40 % verdünnten Dispersion gemäß Beispiel 1 gibt man

6 Teile einer Polyethylenwachsemulsion (35-%-ig), die nach dem Phillips-Verfahren erhalten wird,
6 Teile einer 15-%-gen wäßrigen Lösung eines Styrol-Maleinat-Harzes,
56,3 Teile Wasser
0,7 Teile Nonylphenol x 10 Ethylenoxid
2,5 Teile Methyldiglycol
1,5 Teile Tributoxyethylphosphat
1 Teil fluorhaltiges Verlaufmittel nach Beispiel 5.

Auf Linoleum aufgebracht trocknet die Emulsion zu einem harten, elastischen Film auf, der ebenfalls hervorragende wasserecht ist.

**Vergleichsbeispiel B**

Die Beispiele 5 und 6 wurden wiederholt, jedoch wurde anstelle der erfindungsgemäßen Dispersion eine gemäß Vergleichbeispiel A erhaltene eingesetzt.

Es ergab sich in beiden Fällen eine wesentlich schlechtere Wasserechtheit, die sich darin äußerte, daß eine Wischbehandlung der Filme mit einem feuchten Lappen zu einer Vergrauung und starken Verminderung des Glanzes führte.

**Patentansprüche**

1. Fußbodenpeliermassen in Form von wäßrigen Dispersionen von mit Metallionen vernetzten wasserunlöslichen Copolymerisaten, die als Monomereinheiten carboxylgruppenhaltige Comonomere und monoethylenisch ungesättigte Verbindungen, die mindestens eine zur kovalenten Vernetzung der Copolymerisate befähigte reaktive Gruppe tragen, einpolymerisiert enthaten, wobei die Dispersionen mindestens 8 % an Feststoffen enthalten und einen pH-Wert von 7 bis 11 aufweisen, *dadurch gekennzeichnet,* daß in den Copolymerisaten als carboxylgruppenhaltige Comonomere 5 bis 15 Gew.-% Acrylsäure oder Methacrylsäure und vernetzend wirkende ethylenisch ungesättigte Verbindung N-Methylol(meth)acrylamid in einer Menge von 1 bis 5 Gew.-% - jeweils bezogen auf das Copolymerisat - einpolymerisiert sind und die Dispersionen zusätzlich Wachse und/oder Polyethylen in einer Menge, bezogen auf das Copolymerisat, bis zu 95 Gew.-% enthalten.

2. Fußbodenpoliermassen gemäß Anspruch 1, *dadurch gekennzeichnet,* daß die Dispersionen ein sauerstoffhaltiges Hochdruckpolyethylen enthalten, das ein Molekulargewicht von 10 000 bis 30 000 und einen Erweichungspunkt von 100°C besitzt.



**Revendications**

1. Matières de polissage de parquets sous forme de dispersions aqueuses de copolymérisats insolubles dans l'eau, réticulés avec des ions métal et qui contiennent, introduits en polymérisation, comme motifs monomères, des comonomères à groupes carboxyle et des composés à insaturation monoéthylénique portant au moins un groupe réactif apte à la réticulation covalente du copolymérisat, les dispersions contenant au moins 8 % de matières solides et présentant un pH de 7 à 11, caractérisées par le fait que l'on introduit en polymérisation dans les copolymérisats, comme comonomères à groupes carboxyle, 5 à 15 % en poids d'acide acrylique ou méthacrylique et comme composé réticulant à insaturation éthylénique, du N-méthylol(méth)acrylamide en proportion de 1 à 5 % en poids, rapportée au copolymérisat, et les dispersions contiennent encore, en plus, des cires et/ou du polyéthylène en quantité allant jusqu'à 95 % en poids rapportée au copolymérisat.

2. Matières de polissage pour parquets selon la revendication 1, caractérisées par le fait que les dispersions contiennent un polyéthylène haute pression oxygéné, qui possède un poids moléculaire de 10 000 à 30 000 et un point de ramollissement de 100°C.

**Claims**

1. Floor polishes in the form of aqueous dispersions of water-insoluble copolymers crosslinked with metal ions and containing copolymerized units of carboxyl-containing comonomers and monoethylenically unsaturated compounds bearing at least one reactive group capable of covalently crosslinking the copolymers, the dispersions containing at least 8 % of solids and having a pH of 7 to 11, *characterized in that* N-methylolacrylamide or N-methylolmethacrylamide as ethylenically unsaturated compound having a crosslinking action is incorporated by polymerization into the copolymers in an amount of from 5 to 15 % by weight, based on the copolymer, and the dispersions additionally contain waxes and/or polyethylene in an amount of up to 95 % by weight, based on the copolymer.

2. Floor polishes as claimed in claim 1, *characterized in that* the dispersions contain an oxygen-containing low density polyethylene having a molecular weight of from 10,000 to 30,000 and a softening point of 100°C.